# EUROPEAN PATENT APPLICATION

(11) **EP 0 544 977 A1**
(43) Date of publication of application: **09.06.1993**
(21) Application number: 92102619.1
(22) Date of filing: 17.02.1992
(51) Int. Cl.: B32B 31/20

(54) **Method for laminating substrate with film and laminator**

(30) Priority: 03.12.1991 JP 319432/91
(71) Applicant: HAKUTO CO., LTD., Tokyo (JP); SANEI GIKEN CO., LTD., Amagasaki-shi, Hyogo-ken (JP)
(72) Inventor: Miyake, Eiichi, Toyonaka-shi, Osaka (JP)
(74) Representative: Henkel, Feiler, Hänzel & Partner

(57) **Abstract**

In a method for laminating a single side surface of a flexible, thin substrate (11) with a film (39), a substrate is transported to a position in front of a pair of lamination rollers (17) and stopped at that position. One side surface of a front end portion of the substrate is held by suction on a suction block (61) so that the front end portion of the substrate is maintained in a substantially flat position. A film is tack-attached to the other side surface of the front end portion of the substrate. After completion of tack attachment of the film to the substrate, the substrate is driven into a nip defined by the pair of lamination rollers, whereby the substrate is laminated with the film.

## Description

The present invention generally relates to a method for laminating a single side of a substrate with a photosensitive dry film and to a laminator thereon. The invention is in particular suitable for use in laminating a single side surface of a thin substrate with a film.

A method and a laminator for use therein are disclosed, for example, by Japanese Patent Publication (KOKOKU) No. 62-49169 in which a print board is laminated with a film sheet severed from a continuous length of web of photosensitive dry film. Conventionally, such a laminator has been intended to be applied to a relatively thick and rigid print board, such as copper lined glass epoxy resins.

It is also common in prior arts to simultaneously apply a film to both side surfaces of a substrate. Accordingly, and in accordance with prior art technique, a print board is first brought to a position in front of a pair of lamination rolls and stopped there. Then, separate upper and lower tack-attachment blocks approach the print board. Each of the tack-attachment blocks carries a distal end portion of a film which is supplied from a film supply device. Each tack-attachment block urges the front end portion of the board and tack-attaches the distal end portion of the film to the front end portion of the board. Thereafter, the board with the films attached thereto is driven into a nip defined between the pair of lamination rollers, so that the board is laminated at both side surfaces thereof with a film sheet cut into a predetermined length.

Tension exists in the film attached to the front end portion of the board. Such a tension has a tendency to bend the board toward the film supply device. It is, however, noted that, when a film is tack-attached to both side surfaces of the board, tension in each of the upper and lower films substantially balance one another, thus preventing the board from bending to any significant degree.

Recently, however, print boards have become highly integrated and light weight, thus tending to become thinner. As to flexible print boards having a particularly high resiliency, such as polyimide plates lined with copper, it is very difficult to laminate surfaces of such a thin print board with a photosensitive dry film.

A flexible substrate may be laminated with a film at its opposing side surfaces or at its single side surface. When a substrate is laminated with a film at its opposing side surfaces, it is possible to prevent the substrate from bending significantly by balancing tensions in the upper and lower films with each other, as described above. On the other hand, when it is intended to laminate a substrate with a film at its single side surface, tension exists in only one side surface of the substrate. Accordingly, such a thin, flexible substrate would easily bend. Thin, flexible substrates, lined with copper on a single side surface, rather than on opposing sides, in particular, tend to bend even if tension existing in a film is small. For this reason, prior art laminators were incapable of laminating such thin flexible substrates.

It is an object of the invention to provide a method and an apparatus for laminating a single side of a thin and flexible substrate which tends to bend easily with a film.

It is another object of the invention to provide a suitable laminator for use in applying the method of the invention.

In order to achieve the above object, the invention provides a method of laminating a substrate with a film by means of a laminator comprising the steps of: transporting a substrate to a position before a pair of lamination rollers of the laminator and stopping the substrate at that position; holding by suction the stationary substrate by suction at one side surface of the front end portion thereof by means of a suction block so as to maintain the substrate in a substantially planer position; performing tack attachment of the film at the distal end thereof to the other side surface of the front end portion of the substrate which is held by suction from the suction block; driving the front end portion of the substrate into a nip defined between the pair of lamination rollers, after the tack attachment of the film has been completed; and laminating the other side surface of the substrate with the film of a predetermined length by means of the pair of lamination rollers.

In one preferred embodiment of the invention, a suction block holding by suction thereon the front end portion of the substrate is advanced to a position proximate to the pair of lamination rollers, and thereafter the substrate is driven into the nip of the pair of lamination rollers.

Preferably, the film is held in such a manner that only a slight amount of tension is applied to the film at least during its course from when the tack attachment thereof to the substrate is performed to when the film is started to be laminated onto the substrate by means of the lamination rollers.

In another preferred embodiment of the invention, a suction force applied to the substrate is decreased when the substrate is driven into the nip of the pair of lamination rollers after completion of the tack attachment of the film to the substrate.

The substrate may be pre-heated before entering the nip between the pair of lamination rollers.

The tack attachment of the film to the substrate may be performed by a tack-attachment block which is located at a position to face the other side surface of the substrate and supports the distal end of the film, the tack-attachment block being designed to move toward the substrate so as to urge the distal end of the film to the other side surface of the forward end portion of the substrate, and forces acting on the substrate are balanced by means of a press block which does not carry a film and is located at a position to face the one side surface of the substrate, the press block being designed to urge against the suction block at the back side thereof, simultaneous with carrying out the tack attachment of the film is performed.

The present invention also provides a laminator for laminating a substrate with a film comprising: a pair of lamination rollers; means for transporting a substrate through the pair of lamination rollers; means for supplying a film; and means for performing tack attachment of the film from the film supplying means at the distal end thereof to one side surface of the front end portion of the substrate, while the substrate is positioned in front of the pair of lamination rollers, characterized in that; the laminator further comprises a suction block having a flat surface on which a side surface of the front end portion of the substrate opposite to the one side surface thereof is held by suction from the suction block when the substrate is located at a position in which the tack attachment of the film to the substrate is performed.

The suction block may be designed to be displaceable to a position proximate to the pair of lamination rollers at a same speed as that of the substrate, with the front end portion of the substrate being held by suction on the suction block.

Preferably, the film supplying means includes means for controlling a tension in the film.

Means for heating the substrate may be provided in front of the pair of lamination rollers.

In one embodiment, the heating means is provided at the suction block.

In accordance with the lamination method of the invention, a side surface of the front end portion of the substrate opposite to the one side surface thereof to which a film is tack-attached is held by suction on the suction block so as to be maintained in a planar configuration during its course from a position where a film is tack-attached to a single side surface of the substrate to a position where lamination is initiated. Thus, even with a very flexible thin substrate, the forward end of such a substrate with a film tack-attached thereto may be reliably driven into a nip of a pair of lamination rollers regardless of whether the substrate is subjected at its single side surface to tension in the film.

When there is a significant gap between a position in which tack-attachment is performed and a position of the lamination rollers, such a gap can be reduced by advancing the suction block together with the substrate the front end portion of which is held by suction on the suction block to a position proximate to the lamination rollers after completion of the tack-attachment of the film.

A tendency of the substrate to be bent due to tension in the film may further be decreased by designing the laminator so that only a slight tension may be applied to the film at least during its course after the film is tack-attached to the substrate and before the lamination of the film onto the substrate is initiated by means of the lamination rollers. In such a case, the level of required suction force will be reduced.

Suction force exerted by the suction block may appropriately be reduced when the substrate is driven into the pair of lamination rollers after completion of the tack-attachment of the film, so as to smoothly drive the substrate into the nip of lamination rollers.

The substrate may be pre-heated before being entered between the pair of lamination rollers so as to permit the substrate to extend to some extent beforehand. In this way, the substrate is prevented from forming longitudinal wrinkles or crimps, which otherwise would be caused when a substrate, which is restricted from extending laterally between lamination rollers, tends to rapidly extend laterally therebetween.

According to one embodiment of the invention, a film is tack-attached to the substrate in such a manner that the tack-attachment block, disposed to face one side surface of the substrate, is moved toward the substrate so as to urge the distal end of the film against the one side surface of the forward end portion of the substrate. At the same time, a pressure block (or tack-attachment block) disposed to face the other side surface opposing the above one side surface of the substrate is displaced toward the substrate so as to urge a suction block, which holds by suction the other side surface of the substrate on the suction block, at the backside thereof. Accordingly, any forces acting on the substrate can be balanced relative one another, so that it is unnecessary for the suction block itself to withstand a force exerted from the tack-attachment block. Thus, the suction block need not be of a significantly strong construction. The laminator of the invention for laminating a single side surface of a thin, flexible substrate with a film may be constructed by simply adding a suction block into a conventional laminator for laminating both side surfaces of a substrate with films.

It will be appreciated that the present invention is not restricted to the particular embodiment or application that has been described and illustrated and that many variations may be made therein without departing from the scope of the invention as found in the appended Claims and the equivalents thereof.

For a better understanding of the invention, and to show how the same may be carried into effect, reference will now be made, by way of example, to the accompanying drawings in which like reference numerals refer to like elements.

Fig. 1 is a side elevational view, partly in section, of a laminator according to one embodiment of the invention, illustrating the laminator in a position prior to tack-attachment of a film to a substrate.

Fig. 2 is a side elevational view, partly in section, of the laminator shown in Fig. 1, illustrating the laminator in a position in which tack-attachment of a film to the substrate is being performed.

Fig. 3 is a side elevational view, partly in section, of the laminator shown in Fig. 1 and Fig. 2, illustrating the laminator in a position after completion of the tack-attachment of the film to the substrate.

Fig. 4 is a side elevational view of means for supplying the film.

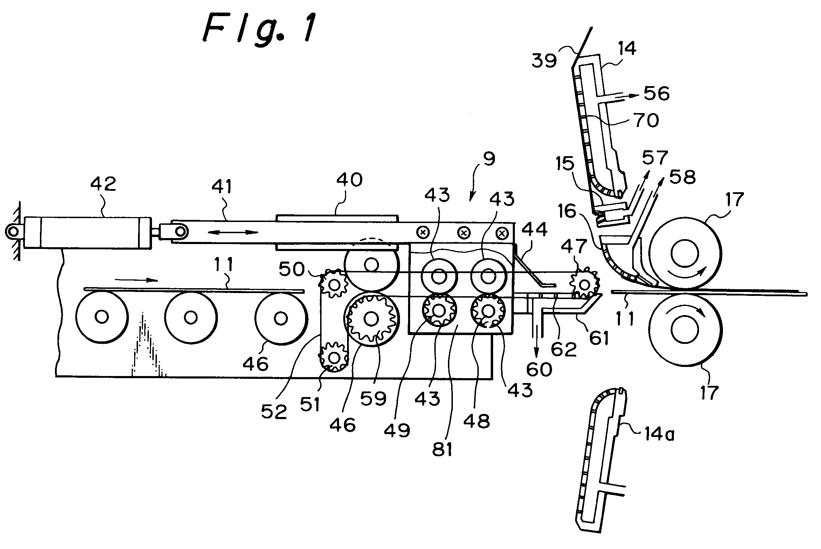

Fig. 1 is a schematic side elevational view, partly in section, of a laminator according to the present invention. The laminator includes a pair of upper and lower lamination rollers 17, a conveyer roller 46 constituting means for transporting a substrate 11 through a nip defined by the pair of lamination rollers 17, and a tack-attachment block 14 constituting means for performing tack-attachment of a film 39 at its distal end to a front end portion of the substrate 11.

The tack-attachment block 14 is of a hollow construction so as to define a vacuum passage. A surface of the tack-attachment block 14 on which the film is held by suction is provided with a plurality of apertures 70. The hollow inside of the tack-attachment block 14 is in fluid communication with a vacuum source (not shown). The tack-attachment block 14 is so designed that, when evacuated as shown by an arrow 56 in Fig. 1 during tack-attachment of a film, a distal end of the film is sucked to the sucking surface of the tack-attachment block 14 so as to be held thereon.

A cutter backup 15 and film guide 16 also have a vacuum suction mechanism including a plurality of apertures and a vacuum passage which are substantially the same as those of the tack-attachment block 14.

The cutter backup 15 includes a lateral groove. The lateral groove is adapted to receive therein a tip of a blade of a rotary cutter (not shown). The rotary cutter is movable in the horizontal direction so as to cut a continuous web of film 39 into a film sheet of predetermined length during the film web is laminated on the substrate 11. When the cutter backup 15 is evacuated as shown by an arrow 57 in Fig. 1, a continuous web of the film 39 is held by suction on a corresponding surface of the cutter backup 15 and severed.

The film guide 16, when evacuated as shown by an arrow 58 in Fig. 1, supports by suction the trailing end of the film cut sheet thereon so as to prevent the trailing end of the film cut sheet from falling down on the substrate 11 during lamination.

A suction block, designated by reference numeral 61, holds thereon by suction a lower surface of a forward end portion of the substrate 11 where the film 39 is tack-attached to the substrate. A hollow inside of the suction block 61 is in fluid communication with a vacuum source (not shown). The suction block 61 includes a flat suction surface having a width substantially the same as that of the substrate. The suction surface is provided with a plurality of apertures 62. When the suction block 61 is evacuated as shown by an arrow 60 in Fig. 1, while the forward end of the substrate 11 is placed upon the suction surface of the block 61, the forward end of the substrate is held by suction onto the suction surface of the block 61 so as to maintain the forward end of the substrate 11 in a substantially flat manner. A suction force allowing the substrate 11 to be held on the suction block 61 may be increased or decreased by varying the magnitude of evacuation.

The suction block 61 is mounted on a front end of a pinch roller unit 9. The pinch roller unit 9 is displaceable in a horizontal direction. Accordingly, the suction block 61 is also displaceable in the horizontal direction, along with the pinch roller unit 9.

The pinch roller unit 9 includes two pairs of pinch rollers 43, a guide plate 44, and a frame 81. The two pairs of pinch rollers 43 are respectively disposed in an upper and lower locations in a substrate transportation path extending between the lamination rollers 17 and one of the conveyor rollers 46 which is disposed adjacent to the lamination rollers 17. In some cases, only one pair of pinch rollers 43 may be used, or three pairs of pinch rollers 43 may be used. The guide plate 44 is disposed in front of the pinch rollers 43 (rightwards of the pinch rollers as viewed in Fig. 1). The guide plate 44 serves to guide the trailing end of the film 39, while at the same time preventing lift-up or floating up of the substrate 11. Widths of the pinch rollers 43 and guide plate 44 are greater than those of the substrate 11 and film 39, respectively. The pinch rollers 43 and guide plate 44 are supported on the frame 81 at their opposed ends. Opposed sides of an upper portions of the frame 81 are secured to distal ends of a pair of support bars 41 which are slidably guided by a pair of guide blocks 40. The frame 81 is supported by the support bar 41. The proximal end of each of the support bars 41 is connected to a rod of a corresponding one of a pair of air cylinder devices 42. Thus, the pinch rollers 43 and guide plate 44 are so constructed that they may reciprocate or move forwardly and rearwardly, together with the suction block 61 by reason of actuation of the air cylinder devices 42.

A sprocket 59 is attached to one end of an axle of the roller 46 which is driven by a motor (not shown). The sprocket 59 engages with a chain 52 cooperatively extending around sprockets 47, 50 and 51 which act as idle wheels. Sprockets 49 and 48 attached to ends of axles of the lower pinch rollers 43 also engage with the chain 52. Accordingly, when the rollers 46 are being driven for rotation, the pinch rollers 43 in the pinch roller unit 9 in a stationary state are also driven for rotation by means of the chain 52 and sprockets 49, 48 at a speed the same as that of the rollers 46.

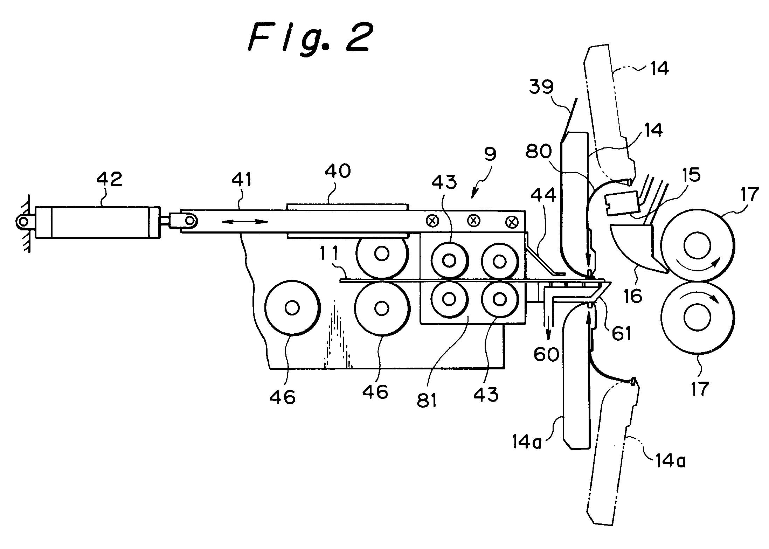

The substrate 11 is laminated with a film in the manner described below. The substrate 11 having been transported by the conveyer rollers 46 is stopped at a position in which the forward end portion of the substrate 11 is seated on the suction block 61. The substrate 11 is stopped when the rollers cease to rotate. Evacuation of the suction block 61 is performed so that the forward end portion of the substrate 11 is held by suction on the suction surface of the suction block 61. Then, the tack-attachment block 14 carrying by suction force the distal end of the film approaches the substrate 11 along a path 80 so that the distal end of the film 39 is tack-attached to the substrate 11 (see Fig. 2). In a laminator of a type configured to laminate opposing side surfaces of a substrate with films, another tack-attachment block 14a is provided below the substrate. Thus, the tack-attachment block 14a can be used as a pressure block. In such a construction, the lower tack-attachment block 14a carrying no film thereon is moved upwardly so as to be brought into pressing engagement with the lower surface of the suction block 61. In this way, forces acting on the substrate in upward and downward directions may be balanced relative to one another. Accordingly, it is unnecessary for the suction block 61 to be rigidly secured.

Upon completion of the tack-attachment of the film to the substrate 11, the tack-attachment block 14 is moved away from the substrate 11 along the path 80 to a position shown in Fig. 2 by a phantom line. At this stage, the forward end portion of the substrate 11 is subjected to a tension in the film 39 which tends to bend the forward end portion of the substrate 11 upwardly. Nevertheless, the forward end portion of the substrate 11 is maintained in a planar state, since the forward end is held by suction on the suction block 61.

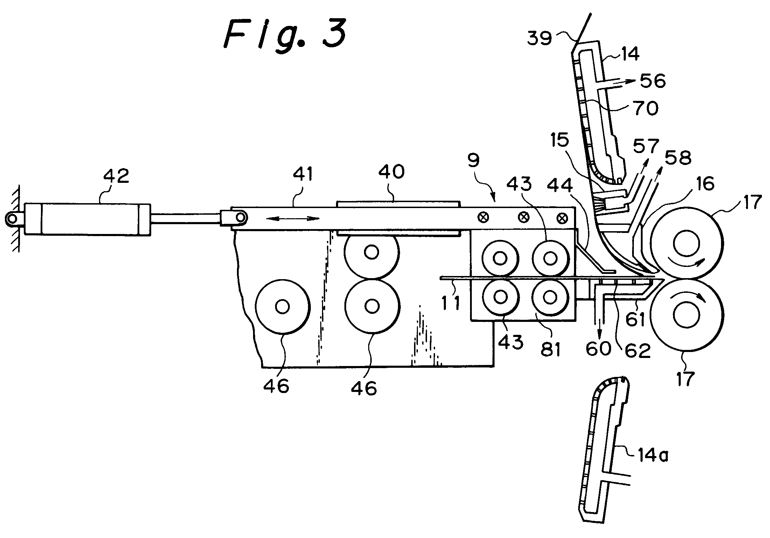

Then, the substrate 11, with the distal end of the film 39 being tack-attached thereto, is again started to be transported by means of the conveyer rollers 46. At the same time, the pinch roller unit 9 with the suction block 61 is advanced by the air cylinder devices 42 at a speed substantially the same as the substrate transportation speed (i.e., the circumferential speed of the rollers 46) and stopped at the position shown in Fig. 3. In this position shown in Fig. 3, the forward end portion of the substrate 11 which is held by suction on the suction block 61 is located a position proximate to the lamination rollers 17, and the guide plate 44 is located a position proximate to the film guide 16.

During movement of the pinch roller unit 9, the pinch rollers 43 remains unrotated, since the tendency of the pinch rollers 43 to be rotated in one direction by means of the chain 52 is counterbalanced with the tendency of the pinch rollers 43 to be rotated in the opposite direction due to the fact that the pinch rollers 43 are advanced while engaged with the substrate 11. Thus, the pinch rollers 43 clamping the forward end portion of the substrate 11 therebetween are moved to a position shown in Fig. 3 without rotating. During this movement, the forward end portion of the substrate 11 is maintained in a planar state even when it is subjected to a tension in the film 39, since the forward end portion of the substrate 11 is held by suction on the suction block 61.

Once the pinch roller unit 9 is stopped, the pinch rollers 43 again begin to be rotated at the same speed as the circumferential speed of the rollers 46, whereby the substrate 11 is driven into a nip defined by the pair of lamination rollers 17. When this occurs, the suction surface of the suction block 61 serves as a guide surface for the substrate 11 driven into the nip of the lamination rollers 17. In this stage, magnitude or degree of evacuation force applied to the suction block 61 may be decreased, so that the substrate 11 can be driven smoothly.

The sucking operation of the suction block 61 may be stopped, once the forward end portion of the substrate 11 and distal end of the film 39 have been clamped between the pair of lamination rollers 17.

When the rearward end of the substrate 11 has passed the suction block 61, the pinch roller unit 9, along with the suction block 61, are retracted to a position shown in Figs. 1 and 2 by the actuation of the air cylinder devices 42. Alternatively, the pinch roller unit 9, as well as the suction block 61, may be retracted, when the forward end portion of the substrate 11 is clamped between the pair of lamination rollers 17.

The forward end of the substrate 11 is held by suction on the suction block 61 just before it is clamped between the pair of lamination rollers 17, as mentioned above. Thus, the substrate, even if thin and flexible, may be firmly laminated at its single side surface with a film even when the substrate is subjected to a tension in the film which is tack-attached thereto.

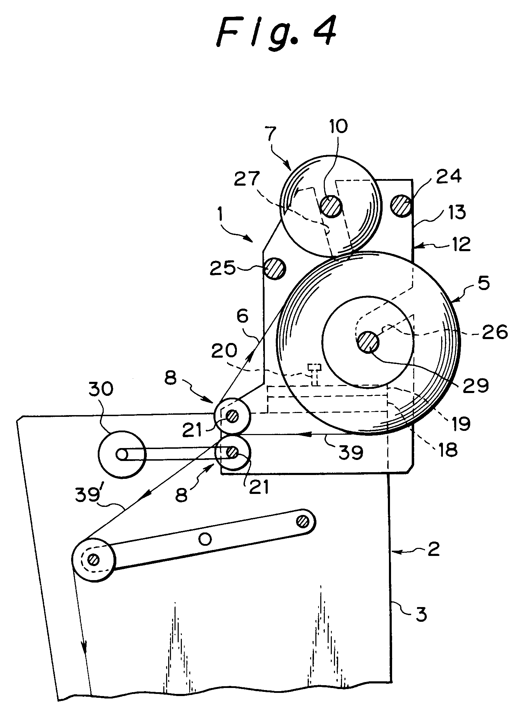

In laminating a single side surface of a thin and flexible substrate with a film, it is also desirable to reduce tension in the film, to which the substrate is subjected, in order to prevent the substrate from bending. Fig. 4 is a side elevational view illustrating a film supply device 1 employing means for controllably adjusting tension in the film.

The film supply device 1 is mounted, as a unit, on a frame 3 of a laminator body 2. The film supply device 1 comprises a dry film roll 5 with a length of photosensitive dry film 39 wound circumferentially around the axis thereof, a take-up roll 7 for winding therearound a length of protective film 6 having been peeled from the dry film 39, a pair of guide rollers 8 for clamping therebetween the dry film 39 unwound from the dry film roll 5, and a unitary bearing member 12 for rotatably supporting axles 29, 10, 21 of the rolls 5, 7 and the rollers 8 at opposite ends thereof.

The bearing member 12 consists of a pair of bearing plates 13 (only one of them is shown in Fig. 4) and connection rods 24, 25 for connecting the bearing plates 13 together. Each of the bearing plates 13 is formed with slots 26, 27. The opposite ends of axles 29, 10 of the dry film roll 5 and take-up roll 7 are received in the slots 26, 27, respectively, and supported thereby. A stopper (not shown) may be provided at an opening of each of the slots 26, 27, to prevent the axles of the rolls from being disengaged from the respective slots.

The dry film 39 which has been unwound from the dry film roll 5 passes between the pair of guide rollers 8 and stripped of its protective film 6 therefrom. The protective film 6 stripped or peeled off the film 39 is directed to the take-up roll 7 and a remaining portion 39' of the dry film (with no protective film) is directed to a tack-attachment member (not shown in Fig. 4) of a laminator.

The dry film roll 5 and take-up roll 7 are configured so as to be in contact with each other at their outer peripheral surfaces and so as to be supported relative to each other. Due to the contact between the rolls 5 and 7, rotational force may be transmitted therebetween.

The bearing plates 13 is formed in the outer surface at the lower portion thereof with a protrusion 18 which extends laterally outwardly. The film supply device 1 is attached to the laminator body 2 via the protrusion 18. A fixture 19 of an L-shaped cross-sectional configuration is fixedly connected to un upper end portion of the frame 3 of the laminator body 2 and extends laterally of the laminator body 2. A groove is defined between the fixture 19 and the upper end portion of the frame 3. The film supply device 1 may be mounted on the laminator body 2 by slidably inserting the protrusions 18 of the bearing plate 13 into the groove and by tightening a screw 20 threadingly engaged with the fixture 19 so as to fix the film supply device 1 to the laminator body 2. The film supply device 1 can be dismounted from the laminator body 2 in a converse manner. Although only a single pair of the protrusion 18 and fixture 19 is shown in Fig. 4, it will be appreciated that another pair of the protrusion and fixture may be provided in the same manner in opposing relationship with the single pair.

A motor 30 serving as film tension control means is connected to the guide roller 8. Tension in the film 39 which is tack-attached to the substrate may be adjustably reduced by controlling the actuation of the guide roller 8 by means of the motor 30.

The above construction in which the suction block and the film tension adjustment device are used in combination makes it easy and secure to laminate a single side surface of a thin and flexible substrate with a film.

In order to avoid the possibility of the substrate being bent upwardly due to tension in the film when the substrate is moved past the suction block in a cantilever fashion from a position at which tack-attachment of the film to the substrate has been performed and when there is a significant gap between the above point at which tack-attachment has been performed and the position of the lamination rollers, the suction block, after completion of the tack-attachment, may be advanced, together with the substrate the forward end portion of which is held by suction thereon, to a position proximate to the lamination rollers, as mentioned in relation to the foregoing embodiment. Alternatively, the lamination rollers may be configured to approach the substrate. In a case of the suction block being advanced toward the lamination rollers, the speed of the suction block may be equal to or larger than that of the substrate transported by the conveyer rollers.

The laminator according to the illustrated embodiment has been constructed by including a suction block in a conventional laminator designed to laminate both side surfaces of a substrate with films, so as to permit a single side surface of the substrate to be laminated. Thus, the lower tack-attachment block of the conventional laminator which does not need to carry a film thereon is utilized as a pressure block in the present invention. It is noted, however, that, when a laminator dedicated for lamination of a single side surface of a substrate is newly constructed, the lower tack-attachment block of a conventional laminator may be replaced with a pressure block with no vacuum-suction mechanism.

A laminator which performs lamination while transporting a substrate in the horizontal direction has been shown in the drawings. It is however noted that the present invention may be also applied to a laminator which performs lamination while transporting the substrate vertically or in an inclined manner.

The magnitude or degree of evacuation applied to the suction block may suitably be controlled during the movement of the substrate from the point of initiation of a tack-attachment to the point of initiation of lamination.

Typically, the lamination rollers are heated so as to permit a film heat-sealed to a substrate. Thus, when a substrate having a relatively small thickness at circumferential temperature is supplied between the lamination rollers, such a thin substrate tends to extend rapidly. On the other hand, the substrate is prevented, due to the clamp action of the lamination rollers, from extending in a lateral direction or in a direction perpendicular to the longitudinal direction of the substrate. As a result, such a very thin substrate tends to be subject to longitudinal crimping. In order to avoid this, it is preferable for the substrate to be preheated prior to insertion between the lamination rollers. Such a heating means may be provided at the suction block, or at a pair of or pairs of upper and lower pinch rollers adjacent to the tack-attachment block. Otherwise, a suitable means for heating the substrate may be disposed in front of the lamination rollers.

Lamination may also be performed by means of lamination rollers of ambient temperature. In such a case, the substrate laminated with a film will be heated by heating means, and thereafter again passed through heated lamination rollers.

## Claims

1. A method of laminating a substrate with a film by means of a laminator comprising the steps of:
transporting a substrate to a position before a pair of lamination rollers and stopping said substrate at that position;
holding by suction said stationary substrate at one side surface of the front end portion thereof by means of a suction block so as to maintain said substrate in a substantially planer position;
performing tack attachment of said film at the distal end thereof to the other side surface of said front end portion of said substrate which is held by suction from said suction block;
driving said front end portion of said substrate into a nip defined between said pair of lamination rollers, after said tack attachment of said film has been completed; and
laminating said other side surface of said substrate with the film of a predetermined length by means of said pair of lamination rollers.

2. The method according to Claim 1, wherein said suction block holding by suction thereon said front end portion of said substrate is advanced to a position proximate to said pair of lamination rollers, and thereafter said substrate is driven into said nip of said pair of lamination rollers.

3. The method according to Claim 1, wherein said film is held in such a manner that only a slight amount of tension is applied to said film at least during its course from when said tack attachment thereof to said substrate is performed to when said film is started to be laminated onto said substrate by means of said lamination rollers.

4. The method according to Claim 1, wherein a suction force applied to said substrate is decreased when said substrate is driven into the nip of said pair of lamination rollers after completion of said tack attachment of said film to said substrate.

5. The method according to Claim 1, wherein said substrate is pre-heated before entering the nip between said pair of lamination rollers.

6. The method according to Claim 1, wherein said tack attachment of said film to said substrate is performed by a tack-attachment block which is located at a position to face said other side surface of said substrate and supports the distal end of said film, said tack-attachment block being designed to move toward said substrate so as to urge the distal end of said film to said other side surface of said forward end portion of said substrate, and wherein forces acting on said substrate are balanced by means of a press block which does not carry a film and is located at a position to face said one side surface of said substrate, said press block being designed to urge against said suction block at the back side thereof, simultaneous with carrying out said tack attachment of said film.

7. A laminator for laminating a substrate with a film comprising:
a pair of lamination rolls;
means for transporting a substrate through said pair of lamination rollers;
means for supplying a film; and
means for performing tack attachment of said film from said film supplying means at the distal end thereof to one side surface of the front end portion of said substrate, while said substrate is positioned in front of said pair of lamination rollers, characterized in that; said laminator further comprises a suction block having a flat surface on which a side surface of said front end portion of said substrate opposite to said one side surface thereof is held by suction from said suction block when said substrate is located at a position in which said tack attachment of said film to said substrate is performed.

8. The laminator according to Claim 7, wherein said suction block is displaceable to a position proximate to said pair of lamination rollers at the same speed as that of the substrate, with the front end portion of said substrate being held by suction on said suction block.

9. The laminator according to Claim 7, wherein said film supplying means includes means for controlling tension in said film.

10. The laminator according to Claim 7, wherein said laminator further comprises means for heating said substrate, said heating means is positioned in front of said pair of lamination rollers.

11. The laminator according to Claim 10, wherein said heating means is provided at said suction block.
